# EUROPÄISCHE PATENTANMELDUNG

(11) **EP 3 269 958 A1**
(43) Veröffentlichungstag der Anmeldung: **17.01.2018**
(21) Anmeldenummer: 17001221.5
(22) Anmeldetag: 15.07.2014
(51) Int. Cl.: F01N 13/10, F01N 13/18, F16J 15/16, F16L 21/035

(54) **ABGASLEITUNG EINER BRENNKRAFTMASCHINE**

(30) Priorität: 13.09.2013 DE 102013015144
(62) Teilanmeldung aus: 14002436.5
(71) Anmelder: DEUTZ Aktiengesellschaft, 51149 Köln (DE)
(72) Erfinder: Schmitz, Oliver, 50354 Hürth (DE); Reuter, Harald, 51067 Köln (DE); Kringels, Matthias, 53332 Bornheim (DE); Schumacher, Ulrike, 51427 Bergisch Gladbach (DE)

(57) **Zusammenfassung**

Beschrieben wird eine Brennkraftmaschine mit wenigstens einer Abgasleitung (11), wobei die Abgasleitung in Abgasfließrichtung wenigstens einen mit der Brennkraftmaschine verbundenen Krümmer (1) aufweist, umfassend wenigstens eine Steckstückbuchse (9), wenigstens ein an einem Kompensator (2) angeordnetes Steckstück (10), wobei das Steckstück (10) steckbar und entlang der Längsachse des Abgasrohres längsverschieblich in der Steckstückbuchse (9) in der Weise angeordnet ist, dass sich die Steckstückbuchse (9) konzentrisch um das Steckstück (10) herum befindet, wobei sich im Wesentlichen an der Stirnseite des Steckstücks (14) ein konzentrisch um dieses Steckstück (10) herum angeordneter Drahtgestrickring (3) befindet.

## Beschreibung

Die Erfindung betrifft eine Abgasleitung einer Brennkraftmaschine mit einer gasdichten Schiebesitzverbindung mit Kompensatorelement zur Absorption thermischer Spannungen und Toleranzausgleich.

Aus der EP 1 571 303 A1 ist eine Vorrichtung zum Reinigen von Fahrzeugabgasen mit einem gasdurchströmten Filterkörper, der aus mehreren quaderförmigen Einzelkörpern zusammengesetzt ist, und einem den Filterkörper umgebenden Gehäuse bekannt, bei dem der Filterkörper wenigstens abschnittsweise eine, in Hauptströmungsrichtung gesehen, eckige Außenkontur hat und im eckigen Abschnitt außenseitig unbearbeitet ist, und wobei zwischen dem Außenrand der Stirnseite des Filterkörpers und dem Gehäuse wenigstens ein Dichtkörper vorgesehen ist, der die gesamte Axialkraft zwischen Gehäuse und Filterkörper überträgt, wobei der Dichtkörper ein am Außenumfang des Filterkörpers sich nahe seiner Stirnseite erstreckender Dichtring ist, der wenigstens einen sich vor die Stirnseite erstreckenden Dichtabschnitt besitzt, und der Dichtkörper ein mit Dichtmaterial versehener Drahtgestrickring ist.

Die DE 10 2007 006 804 A1 offenbart eine Abgasreinigungsvorrichtung, insbesondere für die Abgasanlage einer Verbrennungskraftmaschine, mit einem Außengehäuse, das zumindest ein erstes und ein zweites Gehäuseteil umfasst, deren einander zugewandten Endbereiche lösbar miteinander verbunden sind, und einem im Außengehäuse angeordneten Partikelfiltersubstrat, wobei die Endbereiche durch selbst gewindebildende Schrauben miteinander verbunden sind und das Partikelfiltersubstrat einen sich an seinem Umfang umgebenden Gehäusemantel aufweist, der in Axialrichtung nahezu vollständig in das erste Gehäuseteil eingeschoben ist, wobei der Gehäusemantel sich in radialer Richtung an seinem linken Ende über einen Drahtgestrickring am ersten Gehäuseteil abstützt.

In der DE 10 2008 014 437 A1 wird ein Abgasstrang zum Zuführen von Abgas einer Verbrennungskraftmaschine zu einer Abgasbehandlungseinrichtung offenbart, welcher einen doppelwandig ausgebildeten Bereich aufweist, wobei ein Zwischenraum zwischen einer äußeren Wand und einer inneren Wand des doppelwandigen Bereichs von einem Medium durchströmbar ausgebildet ist, wobei der Abgasstrang Mittel zum Zuführen einer dem Abgas der Verbrennungskraftmaschine entstammenden Wärmemenge in den Zwischenraum aufweist. Der Abgasstrang weist eine Abzweigleitung auf, welche stromaufwärts des doppelwandigen Bereichs ansetzt und in den Zwischenraum mündet. Dadurch wird aus dem der Abgasbehandlungseinrichtung zuströmenden Abgas ein Teilstrom abgezweigt und in den Zwischenraum eingeleitet. Mittels der Abzweigleitung wird ein als Dichtungselement und Abstandshalter zwischen der äußeren Wand und der inneren Wand dienender Drahtgestrickring überbrückt.

Des Weiteren sind Wellrohrpakete, insbesondere solche mit 90°-Bögen, bekannt, die thermische Spannungen und Toleranzen ausgleichen sollen. Daran ist nachteilig, dass die Wellen des Wellenpaketes, die im Bereich der Biegung so eng aneinander liegen, dass sie bei thermischer Ausdehnung der Leitung gegeneinander gedrückt werden. Dadurch kann keine ausreichende Längenausdehnung stattfinden und die Leitung reißt auf Dauer auf.

Aufgabe der vorliegenden Erfindung ist es, die oben genannten Nachteile zu vermeiden und eine gasdichte Verbindung zu schaffen, die eine zuverlässige thermische Ausdehnung der Leitung zulässt.

Die Aufgabe der vorliegenden Erfindung wird durch eine Brennkraftmaschine mit wenigstens einer Abgasleitung gelöst, wobei die Abgasleitung in Abgasfließrichtung wenigstens einen mit der Brennkraftmaschine verbundenen Krümmer aufweist, der wenigstens eine Steckstückbuchse, wenigstens ein an einem Kompensator angeordnetes Steckstück aufweist, wobei das Steckstück steckbar und entlang der Längsachse des Abgasrohres längsverschieblich in der Steckstückbuchse in der Weise angeordnet ist, dass sich die Steckstückbuchse konzentrisch um das Steckstück herum angeordnet befindet, wobei sich im Wesentlichen an der Stirnseite des Steckstücks ein konzentrisch um dieses Steckstück herum angeordneter Drahtgestrickring befindet, gelöst. Hierbei ist von Vorteil, dass der Drahtgestrickring hochtemperaturfest ist und Wärmedehnungen kompensieren kann.

Weitere vorteilhafte Ausgestaltungen weisen die Unteransprüche auf.

Ausführungsbeispiele werden in den nachfolgenden Figuren dargestellt, es zeigen:
- Figur 1: eine Prinzipskizze des Kompensators mit Schiebesitz
- Figur 2: eine Schnittdarstellung des Steckstücks
- Figur 3: Schnittdarstellung der Steckstückbuchse
- Figur 4: eine Schnittdarstellung durch den Ring
- Figur 5: eine Schnittdarstellung der Abgasleitung mit zwei Steckstücken

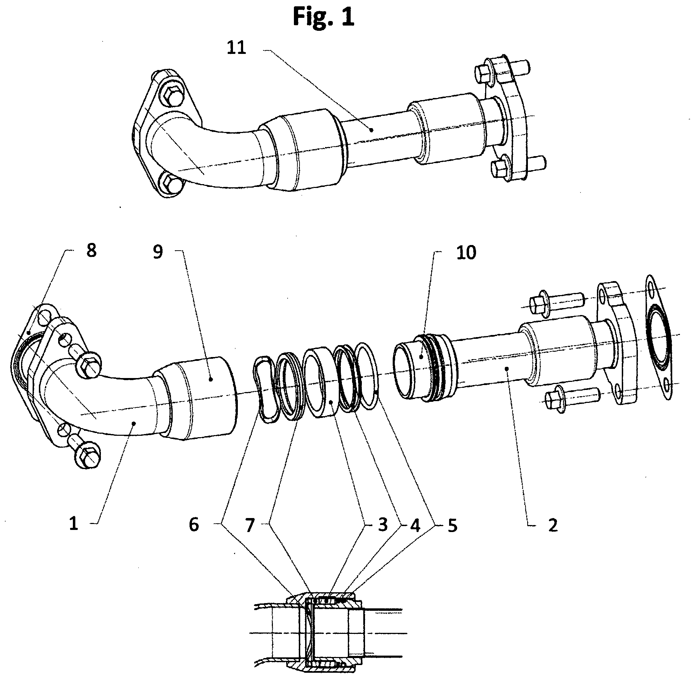

Figur 1 zeigt eine Abgasleitung 11, die in zwei Teile aufgeteilt wird, die über einen Schiebesitz miteinander verbunden sind, dies sind Krümmer 1 und Kompensator 2. Im Schiebesitz zwischen Krümmer 1 und Kompensator 2 wird eine gasdichte Abdichtung mittels eines Drahtgestrickrings 3, der aus einem Verbund aus Edelstahldraht und Silikatfaser besteht, zweier Lamellenringe 4 und einem O-Ring 5 erreicht. Der O-Ring 5 dient hier nur zur Abdichtung beim Dichtheitstest am Montageband des Motors. Im Heißbetrieb des Motors wird der O-Ring 5 verbrennen und die Abdichtung erfolgt nun über das Drahtgestrick des Drahtgestrickring 3 und die Lamellenringe 4. Über eine Wellfeder 6 und einen zusätzlichen Ring 7 wird das Drahtgestrick des Drahtgestrickrings 3 im eingebauten Zustand zusätzlich verpresst, um eine zuverlässige Abdichtung zwischen Steckstück 10 und Steckstückbuchse 9 zu gewährleisten. Die Lamellenringe 4 dienen als zusätzliche Labyrinthdichtung. Auch der Ring 7,

über den die Wellfeder 6 das Drahtgestrick des Drahtgestrickrings 3 verpresst, hat durch seine enge Passung eine dichtende Wirkung. Bei thermischer Ausdehnung kann die Längenänderung im Schiebesitz ausgeglichen werden. Die Abdichtung der beiden Schnittstellen zum Motor erfolgt über Blechsickendichtungen (Pos.8). Alle Komponenten sind für Abgastemperaturen bis 700°C ausgelegt. Davon ausgenommen ist der O-Ring.

Das gerade Kompensatorelement kann weiterhin ein Wellenfederpaket enthalten. Dieses Wellfederpaket kann noch geringe Längenausdehnungen abfangen und axialen Versatz, z. B. durch Einbautoleranzen, ausgleichen.

Neben axialem Toleranzausgleich ermöglicht das verdrehbare Dichtungspaket ebenfalls einen Winkeltoleranzausgleich bis hin zur Abdeckung verschiedener Verdrehvarianten.

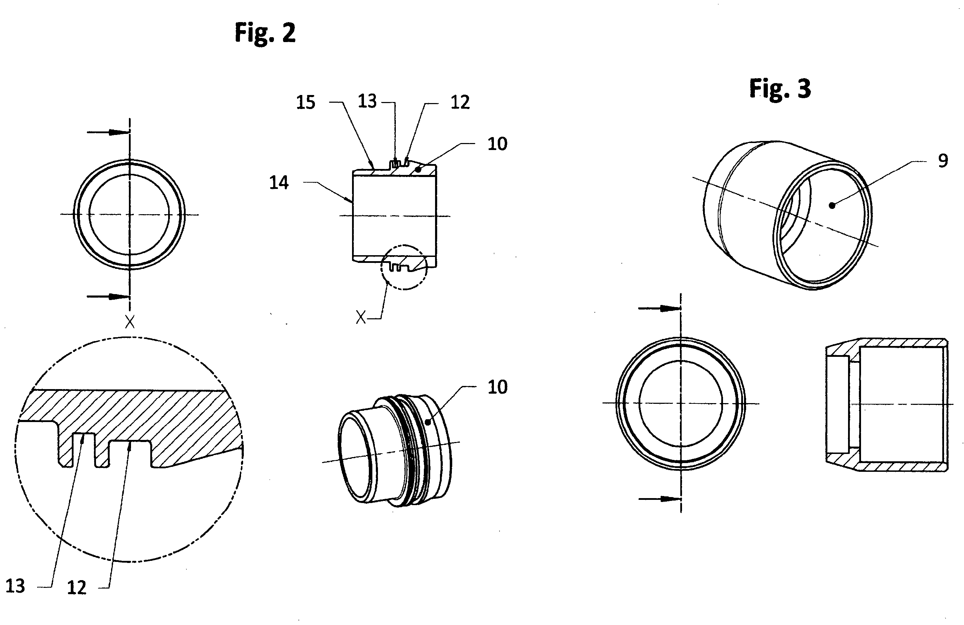

In Figur 2 wird eine Schnittdarstellung des Steckstücks 10 in einer Draufsicht und dem zugehörigen Schnitt dargestellt. Die der Stirnseite des Steckstücks 14 abgewandte Seite weist eine am äußeren Umfang des Steckstücks 10 umlaufende O-Ringnut 12 auf. Zwischen der Stirnseite des Steckstücks 14 und der umlaufenden O-Ringnut 12 ist in unmittelbarer Nähe die am äußeren Umfang des Steckstücks umlaufende Lamellenringnut 13 angeordnet. Von der Stirnseite des Steckstücks 14 bis zur Lamellenringnut 13 erstreckt sich die am äußeren Umfang des Steckstücks 10 verlaufende Drahtgestrickringaufnahme 15.

Figur 3 offenbart eine Schnittdarstellung der Steckstückbuchse 9, die das Steckstück 10 aufnimmt, wie dies in Figur 1 dargestellt ist.

Das Kompensatorelement kann vor oder hinter dem Stückstück/Buchse (10/9) angeordnet sein. Ebenfalls können Steckstück (10) oder Buchse (9) in andere angrenzende Bauteile (z. B. Abgasrohr oder AGR-Krümmer) integriert werden.

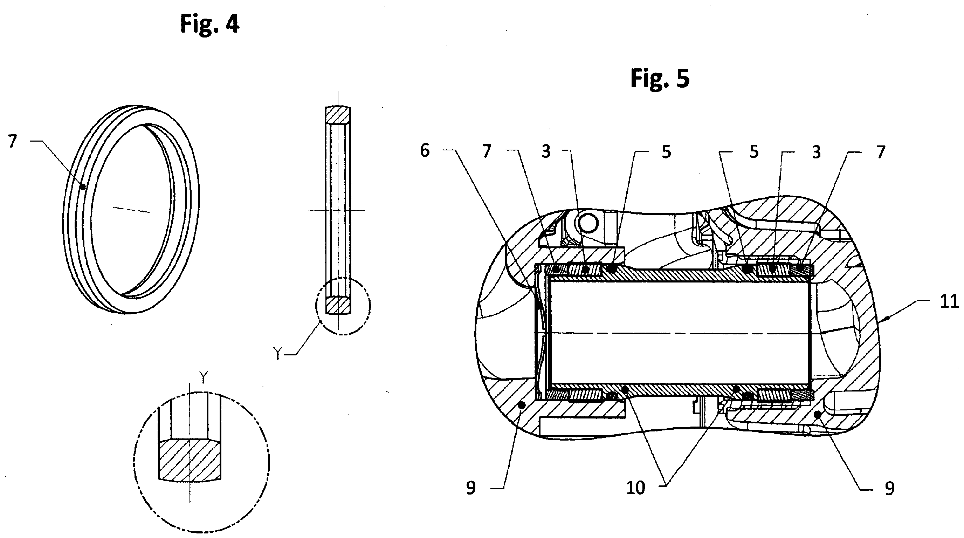

Eine Schnittdarstellung durch den Ring 7, der an der Stirnseite des Steckstücks 14 angeordnet ist, wird in Figur 4 gezeigt. Zur Montageerleichterung sind hier (Einführ-)Fasen angebracht. Die Anordnung des Rings 7 an der Stirnseite von Steckstück 14, konzentrisch umhüllt von Steckstückbuchse 9, wird in den Figuren 1 und 5 dargestellt.

Ein doppeltes Steckstück 10 wird in der montierten Abgasleitung 11 mit zwei Drahtgestrickringen 3 in Figur 5 gezeigt, das in einer alternativen Ausgestaltung beispielsweise zwischen einer Abgasleitung und einem AGR-Kühler angeordnet ist. Die Abdichtung der Abgasleitung 11 erfolgt hier hauptsächlich über das Drahtgestrick des Drahtgestrickring 3. Über eine Wellfeder 6 und einen zusätzlichen Ring 7 wird das Drahtgestrick des Drahtgestrickrings 3 im eingebauten Zustand zusätzlich verpresst, um eine zuverlässige Abdichtung zwischen Steckstück 10 und Steckstückbuchse 9 zu gewährleisten. Auch der Ring 7, über den die Wellfeder 6 das Drahtgestrick des Drahtgestrickrings 3 verpresst, hat durch seine enge Passung eine dichtende Wirkung. Bei thermischer Ausdehnung kann die Längenänderung im Schiebesitz ausgeglichen werden. Zur Kompensation höherer thermischer Ausdehnung kann an der gegenüberliegenden Seite (bei 11) ebenfalls eine (zweite) Wellfeder eingesetzt werden. Darüber hinaus können sogenannte Wellfederpakete (bestehend aus mehr als einer Wellfeder, wechselseitig verschweißt) verwendet werden.

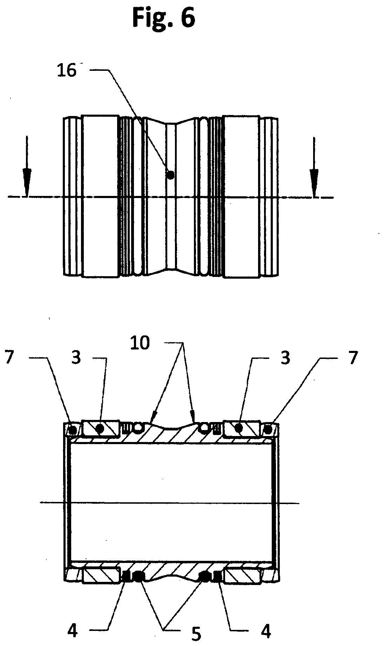

In Figur 6 wird ein solches Doppelsteckstück 16 dargestellt, das zwei Steckstücke 10 aufweist, wobei an jedem Steckstück 10 ein Drahtgestrickring 3 und zwei Lamellenringe 4 an der Stirnseite des jeweiligen Steckstücks 10 konzentrisch um dieses angeordnet sind. Zwischen den Lamellenringen 4 sind zwei O-Ringe 5, die jeweils in einer O-Ringnut 12 liegen, angeordnet. Die Wellfedern sind hier nicht dargestellt.

### Bezugszeichen

- 1: Krümmer
- 2: Kompensator
- 3: Drahtgestrickring
- 4: Lamellenring 5 O-Ring
- 6: Wellfeder
- 7: Ring
- 8: Blechsickendichtung
- 9: Steckstückbuchse
- 10: Steckstück
- 11: Abgasleitung
- 12: O-Ringnut
- 13: Lamellenringnut
- 14: Stirnseite des Steckstücks
- 15: Drahtgestrickringaufnahme
- 16: Doppelsteckstück

## Patentansprüche

1. Brennkraftmaschine, insbesondere dieselbetriebene, mit wenigstens einer Abgasleitung (11), wobei die Abgasleitung in Abgasfließrichtung we¬ nigstens eine Steckstückbuchse (9), mit in der montierten Abgasleitung (11) angeordnetem doppeltem Steckstück (10) aufweist, zwischen einer Abgasleitung und einem AGR-Kühler, und wobei die Abdichtung der Abgasleitung (11) über das Drahtgestrick des Drahtgestrickrings (3) erfolgt, wobei das Steckstück (10) steckbar und entlang der Längsachse des Abgasrohres längsverschieblich in der Steckstückbuchse (9) in der Weise angeordnet ist, dass sich die Steckstückbuchse (9) konzentrisch um das Steckstück (10) herum befindet, wobei sich im Wesentlichen an der Stirnseite des Steckstücks (14) ein konzentrisch um dieses Steckstück (10) herum angeordneter Drahtgestrickring (3) befindet, wobei über das Drahtgestrick des Drahtgestrickrings (3) eine gasdichte Abdichtung erreicht wird.

2. Brennkraftmaschine nach Anspruch 1 oder 2,
**dadurch gekennzeichnet, dass** die Abgasleitung (11) wenigstens einen Ring (7) aufweist, der im Wesentlichen konzentrisch in Steckstückbuchse (9) und um Steckstück (10) angeordnet ist.

3. Brennkraftmaschine nach einem oder mehreren der vorgenannten Ansprüche,
**dadurch gekennzeichnet, dass** der Ring (7) planparallel zum Drahtgestrickring (3) angeordnet ist.

4. Brennkraftmaschine nach Anspruch 1 oder 2,
**dadurch gekennzeichnet, dass** die Abgasleitung (11) wenigstens einen Lamellenring (4) aufweist, der konzentrisch um Steckstück (10) angeordnet ist.

5. Brennkraftmaschine nach einem oder mehreren der vorgenannten Ansprüche,
**dadurch gekennzeichnet, dass** die Abgasleitung (11) wenigstens einen O-Ring (4) aufweist, der konzentrisch um Steckstück (10) angeordnet ist.

6. Brennkraftmaschine nach einem oder mehreren der vorgenannten Ansprüche,
**dadurch gekennzeichnet, dass** der Lamellenring (4) im Wesentlichen zwischen O-Ring (5) und Drahtgestrickring (3) angeordnet ist.

7. Brennkraftmaschine nach einem oder mehreren der vorgenannten Ansprüche,
**dadurch gekennzeichnet, dass** die Abgasleitung (11) im Wesentlichen an der Stirnseite des Steckstücks (14) wenigstens eine Wellfeder (6) aufweist, wobei die Wellfeder (6) konzentrisch in der Steckstückbuchse (9) angeordnet ist.

8. Brennkraftmaschine nach einem oder mehreren der vorgenannten Ansprüche,
**dadurch gekennzeichnet, dass** die Abgasleitung (11) eine O-Ringnut (12) zur Aufnahme wenigstens eines O-Rings (5) aufweist, wobei die O-Ringnut (12) konzentrisch um das Steckstück (10) angeordnet ist.

9. Brennkraftmaschine nach einem oder mehreren der vorgenannten Ansprüche,
**dadurch gekennzeichnet, dass** die Abgasleitung (11) eine Lamellenringnut (13) zur Aufnahme wenigstens eines Lamellenrings (4) aufweist, wobei die Lamellenringnut (13) konzentrisch um das Steckstück (10) angeordnet ist.

10. Brennkraftmaschine, insbesondere dieselbetriebene, mit wenigstens einer Abgasleitung (11), wobei die Abgasleitung in Abgasfließrichtung we¬ nigstens zwei Steckstückbuchsen (9), mit in der montierten Abgasleitung (11) angeordnetem doppeltem Steckstück (10) aufweist, zwischen einer Abgasleitung und einem AGR-Kühler, und wobei die Abdichtung der Abgasleitung (11) über das Drahtgestrick des Drahtgestrickrings (3) erfolgt, wobei das Steckstück (10) steckbar und entlang der Längsachse des Abgasrohres längsverschieblich in der Steckstückbuchse (9) in der Weise angeordnet ist, dass sich die Steckstückbuchse (9) konzentrisch um das Steckstück (10) herum befindet, wobei sich im Wesentlichen an der Stirnseite des Steckstücks (14) ein konzentrisch um dieses Steckstück (10) herum angeordneter Drahtgestrickring (3) befindet, wobei über das Drahtgestrick des Drahtgestrickrings (3) eine gasdichte Abdichtung erreicht wird.
